# EUROPÄISCHE PATENTSCHRIFT

(11) **EP 1 429 907 B1**
(45) Veröffentlichungstag und Bekanntmachung des Hinweises auf die Patenterteilung: **29.09.2010**
(21) Anmeldenummer: 02777266.4
(22) Anmeldetag: 30.09.2002
(51) Int. Cl.: B29C 49/00, G09B 23/30

(54) **VERFAHREN ZUR HERSTELLUNG EINES MODELLSYSTEMS FÜR GEFÄSSMISSBILDUNGEN**
METHOD FOR PRODUCING A MODELING SYSTEM FOR VASCULAIR MALFORMATIONS
PROCEDE DE REALISATION D'UN SYSTEME DE MODELISATION DE MALFORMATIONS VASCULAIRES

(30) Priorität: 29.09.2001 DE 10148341
(43) Veröffentlichungstag der Anmeldung: 23.06.2004
(73) Patentinhaber: Brassel, Friedhelm, 45239 Essen (DE)
(72) Erfinder: Brassel, Friedhelm, 45239 Essen (DE)
(74) Vertreter: Thiel, Christian
(86) Internationale Anmeldenummer: PCT/EP2002/010955
(87) Internationale Veröffentlichungsnummer: WO 2003/028978

(56) Entgegenhaltungen:
- EP-A- 0 825 582
- WO-A-02/41285
- US-A- 3 579 858
- US-A- 4 726 772
- US-A- 4 907 973
- US-A- 6 062 866
- PATENT ABSTRACTS OF JAPAN vol. 1996, no. 06, 28. Juni 1996 (1996-06-28) & JP 08 030192 A (TERUMO CORP), 2. Februar 1996 (1996-02-02)

## Beschreibung

Die Erfindung betrifft ein Verfahren zur Herstellung eines Modellsystems für Gefäßmißbildungen, insbesondere Aneurysmen und Stenosen sowie nach diesem Verfahren hergestellte Modellsysteme und deren Verwendung im medizinischen Bereich.

Herz- und Kreislauferkrankungen gehören, bedingt durch falsche Ernährungsgewohnheiten, Streß und körperliche Prädisposition, zu den häufigsten Todesursachen der modernen Gesellschaft. Einen wichtigen Teilbereich der Herz- Kreislauferkrankungen nehmen dabei angeborene oder erworbene Gefäßmißbildungen wie beispielsweise Aneurysmen oder lokale Gefäßverengungen (Stenosen) ein.

Aneurysmen sind dünnwandige Aussackungen des Gefäßsystems, welche unter anderem auf einer Wandungsschwäche des betroffenen Gefäßes beruhen. Die Therapie solcher Aneurysmen wird auf chirurgisch-operativem Wege (z. B. "Aneurysmen Clip") oder mittels endovaskulärer Techniken durchgeführt. Die endovaskuläre Behandlung von Aneurysmen erfolgt durch Einbringung von Material, welches zur Occlusion des Aneurysmas bestimmt ist, über das Gefäßsystem an die Stelle des zu occludierenden Aneurysmas. Dort wird das Material, z. B. im Blut aushärtende Polymere, Fasern verschiedenster Art oder thrombosierende Spiralen deponiert und der Katheter aus dem Blutgefäßsystem entfernt. Eine weitere Möglichkeit ist die Platzierung von Stents (d. h. Gefäßendoprothesen) über der Abgangsstelle des Aneurysmas im jeweiligen Blutgefäß. Dies führt im Erfolgsfalle zur Wiederherstellung des normalen Blutstromes unter Ausschluß bzw. Einschränkung des Blutzuflusses in das Aneurysma, so daß das im Aneurysma enthaltene Blut koaguliert. Gegebenenfalls können ergänzend gewebsverödende Materialien ("Gewebekleber") eingesetzt werden. Ziel der verschiedenen Maßnahmen ist es, einen stabilen Verschluß des Aneurysmas durch Vemarbung des sich bildenden Blutgerinnsels herbeizuführen.

Die Manövrierung des Occlusionsmittels an den Zielort erfordert große Expertise, zumal Aneurysmen nicht nur im Bereich der großen Leitungsbahnen, sondern häufig auch an schwer erreichbaren Gefäßabschnitten, wie den craniellen oder cerebralen Arterien auftreten. Fehler bei der Manövrierung des Katheters oder der Deponierung des occludierenden Materials sind mit großen Gefahren für den Patienten verbunden, da Gefäßwandverletzungen, im Blutstrom flottierende Bruchstücke abgebrochener Occlusionsspiralen, aus dem Aneurysma in das Blutgefäßsystem gespülte Mengen occludierenden Materials oder ausgespülte Thromben mit hoher Wahrscheinlichkeit Embolien und Gewebsinfarkte nach sich ziehen, was im schlimmsten Falle zum Tode des Patienten führt.

Zur Übung des endovaskulären Manövrierens und Deponierens occludierenden Materials ist es bekannt, ein Modellsystem für Aneurysmen zu verwenden, welches aus einem Glasröhrensystem mit Ausformungen besteht, das mit Flüssigkeit beaufschlagt werden kann. Neue operative Techniken können bei diesem System erprobt werden, bevor sie im Tier oder im Menschen angewandt werden. Auch können unerfahrene Operateure endovaskulärtherapeutische Techniken an diesem System erproben.

Der Nachteil dieses Systems besteht darin, daß die Glasröhren und die die Aneurysmen darstellenden Ausformungen der Glasröhren völlig andere Eigenschaften aufweisen, als natürliche Blutgefäße und Aneurysmen. Insbesondere unterscheidet sich das Glasröhrensystem von Blutgefäßen durch eine mangelnde Elastizität und wesentlich größere Stabilität, so daß selbst nach erfolgreicher Deponierung von Occlusionsmaterialien im Glasröhrensystem nicht sichergestellt ist, daß diese Technik auch im Organismus ohne gesundheitliche Gefährdung des Patienten durchgeführt werden kann. Ein weiterer Nachteil

dieses Modellsystems ist der hohe Kostenaufwand, da die Glasröhren und die Ausformungen mundgeblasen und handgeformt werden müssen. Kostengünstigere nichtelastische Gefäßmodelle aus Plexiglas oder Hartkunststoff weisen im wesentlichen die gleichen Nachteile auf.

Der gleiche Problembereich liegt bei der endovaskulärtherapeutischen Behandlung stenotischer Gefäßabschnitte vor: Gefäßstenosen sind angeborene oder erworbene Gefäßverengungen. Häufigste Ursache erworbener Gefäßstenosen sind arteriosklerotische Gefäßveränderungen, die mit einer Verhärtung, Verdickung und einem Elastizitatsverlust der Gefäße einhergehen und zu einer Einengung des Gefäßvolumens führen. Neben, bzw. ergänzend zu medikamentösen Therpieformen werden hier vor allem endovaskulärtherapeutische Techniken, wie der Ballondilatation oder der Platzierung von Stents als Gefäßstützen zum Offenhalten des Lumens, meistens eine Kombination beider Maßnahmen, eingesetzt. Auch hier besteht Bedarf an Modellsystemen zur Entwicklung und Erprobung geeigneter Therapieformen, da die bekannten starren Systeme den Verhältnissen im Organismus auch in diesem Falle nur ungenügend nahekommen.

US-A-6 062 866 beschreibt ein medizinisches Modell zur Lehre und Demonstration invasiver medizinischer Techniken. Das Modell wird aus Kunststoffmaterial durch Blasformen hergestellt.

WO-A2-02/41285 beschreibt Gefäßmodelle für Simulationszwecke, die aus einem Kunststoffmaterial gefertigt werden können. Zur Fertigung werden Abgusstechniken von natürlichen Oefäßsystemen verwandt.

Angesichts der mit dem Stand der Technik verbundenen Nachteile besteht die Aufgabe der Erfindung in der Schaffung eines kostengünstigen Modellsystems für Gefäßmißbildungen, welches den Eigenschaften von Blutgefäßen und Gefäßmißbildungen näherkommt als die im Stand der Technik bekannten Modellsysteme.

Diese Aufgabe wird erfindungsgemäß durch ein Verfahren zur Herstellung eines Modellsystems für Gefäßmißbildungen gelöst, welches folgende Schritte aufweist:
a) lokales Erwärmen eines ersten Hohlkörpers, welcher zur Flüssigkeitsdurchleitung geeignet ist und zumindest in einem oder mehreren Teilbereichen aus flexiblem, thermoplastisch verformbarem Material besteht, an dem oder den Teilbereichen bis zum Erweichen des thermoplastisch verformbaren Materials, sowie
b) Druckbeaufschlagung des Hohlkörpers mit einem Druck der groß genug ist, eine Ausformung der erwärmten Stelle zu bewirken, wobei anhand der Dauer der Druckeinwirkung und/oder der Stärke des einwirkenden Druckes die Größe und Form der Ausformung bestimmt wird.

Die durch das erfindungsgemäße Verfahren generierten Ausformungen können insbesondere zur Nachbildung von Ausformungen der Gefäßwand wie Aneurysmen oder zur Darstellung erweiterter Gefäßabschnitte genutzt werden.

So können mit Hilfe des Verfahrens beispielsweise Ausformungen erzeugt werden, deren Wandstärke vom Ansatz zur Kuppel hin stark abnimmt und deren Zerreißbarkeit, bedingt durch die Flexibilität des thermoplastisch verformbaren Materials, der von Aneurysmen näherkommt als es herkömmliche Modellsysteme tun. Auch können mit Hilfe des erfindungsgemäßen Verfahrens Modelle für Gefäßstenosen hergestellt werden; in diesem Falle stellen die Ausformungen die unveränderten Gefäßabschnitte dar, wohingegen die nicht ausgeformten Teilbereiche des Hohlkörpers den stenotischen Gefäßabschnitten entsprechen. Im Gegensatz zu starren Gefäßmodellen geben die nach dem erfindungsgemäßen Verfahren hergestellten Modelle nicht nur die Unterschiede hinsichtlich der Dimensionierung des Innenlumens sondern auch die Elastizitätsunterschiede zwischen stenotischen und nicht stenotischen Gefäßabschnitten wieder. In der Regel wird für die Nachbildung von Stenosen ein weicheres und flexibleres Kunststoffmaterial (mit besserer thermoplastischer Verformbarkeit bei geringer Krafteinwirkung) verwandt, um die Aufweitung zu simulieren.

Über die Flexibilität des thermoplastisch verformbaren Materials wird die Elastizität des Gefäßsystems nachgebildet, was das erfindungsgemäß hergestellte Modellsystem der tatsächlichen Situation im Körper wesentlich näherbringt als herkömmliche artifizielle Systeme des Standes der Technik. So kann außer der Form von Gefäßmißbildungen auch deren Elastizität und Fragilität insbesondere im Unterschied zu "physiologischen" Gefäßabschnitten durch Auswahl geeigneter Materialien und Materialeigenschaften nachgestellt werden.

Nach Ausbildung der Ausformung und Abkühlung des thermoplastischen Materials unter seinen Erweichungspunkt, kann das erfindungsgemäß hergestellte Modellsystem direkt mit einer Flüssigkeit beaufschlagt und eingesetzt werden, z. B. zur Erprobung oder Studie endovaskulärtherapeutischer Techniken.

Zur Fertigung auf Vorrat ist es jedoch zweckmäßig, wenn der Hohlraum des ersten Hohlkörpers im Anschluß an die erfindungsgemäße Herstellung in luft- oder inertgasgefülltem Zustand luftdicht verschlossen wird. Auf diese Weise bleiben die Ausformungen formstabil und behalten auch nach lange währender Einlagerung (z. B. über mehrere Monate) ihre ursprüngliche Form. In diesem Fall wird das erfindungsgemäß erzeugte Modellsystem vor Verwendung zu bestimmungsgemäßen Zwecken durch Ab- oder Aufschneiden der Verschlußstellen eröffnet. Zweckmäßigerweise erfolgt das Verschließen durch Verschmelzen oder Verkleben der Öffnungen des unter Gasdruck stehenden Hohlkörpers. Grundsätzlich kommt jedoch jede Maßnahme in Frage, die die Formstabilität der gebildeten Ausformungen gewährleistet.

Es ist zweckmäßig, wenn zumindest die erzeugte Ausformung und vorzugsweise der gesamte erste Hohlkörper durchscheinend oder im wesentlichen durchsichtig ausgebildet ist, so daß beispielsweise der Erfolg eines erprobten Verfahrens von außen einfach visuell verfolgt werden kann. Besonders zweckmäßig ist dabei die Verwendung eines ersten Hohlkörpers, der in seiner Gesamtheit durchscheinend und insbesondere im wesentlichen durchsichtig ausgebildet ist, zur Durchführung des erfindungsgemäßen Verfahrens.

Gemäß einer besonders zweckmäßigen Ausführungsform ist der gesamte erste Hohlkörper aus einem flexiblen Material ausgebildet, da die Schwierigkeit des intravaskulären Manövrierens endovaskulärer Katheter zum großen Teil auf der Fragilität und der Elastizität des Gefäßsystems beruht. Diese Ausführungsform weist den Vorteil auf, daß nicht nur der die Ausformung bildende Bereich den Eigenschaften im Organismus besonders nahe kommt, sondern auch alle anderen Teilbereiche des Hohlkörpers. So kann beispielsweise beim Erlernen endovaskulärer Techniken bereits beim Manövrieren des Mikrokatheters in Richtung der Ausformung (z. B. eines künstlichen Aneurysmas) eine zu stark traumatisierende Handhabung durch den Anwender festgestellt werden. Auch geben mit Hilfe voll flexibler erster Hohlkörper hergestellte Modellsysteme die Eigenschaften durchbluteter Gefäße, wie Windkesseleffekte, etc. wieder. Durch die Wahl geeigneter Pumpsysteme können so pulsatile systolisch-diastolische Flüssigkeitsdrücke erzeugt werden, wie sie im Organismus vorkommen. Zweckmäßig ist überdies ein erfindungsgemäßer Hohlkörper, der in einem - vorzugsweise glasklaren - Gel, z. B. Gelatine oder einem solchen Kunststoffmaterial eingebettet ist. Diese Ausführungsform eignet sich besonders gut zur Simulierung der natürlichen Aufhängung von Gefäßen und Gefäßnetzen im Körper.

Gemäß einer weiteren bevorzugten Ausführungsform besteht der gesamte erste Hohlkörper aus einem thermoplastischen Material. Diese Ausführungsform ist besonders kostengünstig und erlaubt überdies die Generierung der Ausformungen an beliebigen Stellen des ersten Hohlkörpers. Besonders bevorzugt ist dabei eine Ausführungsform, in der der gesamte erste Hohlkörper aus einem flexiblem, thermoplastisch verformbaren Material ausgebildet ist, welches zudem durchsichtig ist.

Grundsätzlich kann jede Art thermoplastisch verformbarer Materialien eingesetzt werden, die gut verarbeitet werden können. Als thermoplastisch verformbare Materialien eignen sich insbesondere PVC (Polyvinylchlorid), PUR (Polyurethan), PP (Polypropylen) oder PE (Polyethylen), da diese auch flexibel ausgebildet sein können. PVC ist dabei besonders bevorzugt. Der angesprochene Durchschnittsfachmann kann dabei durch die Wahl des Materials und durch die Dimensionierung der Wandstärke des ersten Hohlraumes die Elastizität des Modells zur Nachstellung bestimmter Gefäße, Gefäßnetze oder Gefäßmißbildungen modulieren.

Das lokale Erwärmen erfolgt vorzugsweise durch die lokale Einwirkung einer erhitzten Flüssigkeit, vorzugsweise einer lipophilen Flüssigkeit mit hohem Siedepunkt, wie z. B. einem Öl; durch lokale Einwirkung einer Flamme, vorzugsweise einer durch einen Gasbrenner erzeugten Flamme; durch die Verwendung eines erhitzten Drahtes, insbesondere einer erhitzten Drahtspirale, die von außen oder innen lokal auf die Wandung des Hohlkörpers einwirkt; oder aber durch lokale Bestrahlung mit Mikrowellen. Grundsätzlich kann jedoch jede Art der Wärmeeinwirkung angewandt werden, welche geeignet ist, eine lokale Erwärmung des thermoplastischen Materials unter Erweichung zu bewirken. Dabei ist die Erwärmung mittels einer Gasflamme besonders kostengünstig. Die Verwendung von Mikrowellen oder erwärmten Flüssigkeiten (z. B. Paraffinöl) zur Erwärmung des ersten Hohlkörpers erlaubt dagegen eine besonders präzise Thermoregulierung.

Gemäß einer zweckmäßigen Ausführungsform ist der erste Hohlkörper ein System aus zweidimensional angeordneten, miteinander kommunizierenden Leitungsbahnen (die sich, entsprechend der Situation eines natürlichen Gefäßsystems, z. B. hinsichtlich Durchmesser und/oder Länge sowie ihrer Form - gewunden oder im wesentlichen gestreckt - unterscheiden können) oder Teil eines solchen Systems. So kann der erste Hohlkörper beispielsweise nach Art der Herstellung von Leiterplatten durch bereichsweises Verkleben oder Verschweißen zweier, insbesondere flexibler, Kunststoffolien miteinander hergestellt werden, wobei die das Gefäßsystem oder Teile desselben nachbildenden kommunizierenden Leitungsbahnen freigelassen werden. Auf diese Weise wird ein zweidimensionales Modell eines Gefäßsystems geschaffen, an dem sich insbesondere auch die Zielsteuerung durch verzweigte Gefäßbahnen üben läßt. Insbesondere lassen sich so einfach Modelle gewundener Gefäße herstellen. Zur Herstellung des Systems eignet sich dabei vorzugsweise eine reißfeste Folie, z. B. mit einer Wandstärke, die in etwa der durchschnittlicher Gefäßwandungen entspricht.

Gemäß einer weiteren bevorzugten Ausführungsform ist der Hohlkörper ein Schlauch, ein zwei- oder dreidimensionales System miteinander kommunizierender (also leitend verbundener) Schläuche (die sich, entsprechend der Situation eines natürlichen Gefäßsystems, z. B. hinsichtlich Durchmesser, Wandstärke und/oder Länge sowie ihrer Form - gewunden oder im wesentlichen gestreckt - unterscheiden können) oder Teil eines solchen Systems. In seiner einfachsten Form als Schlauch ist das Modellsystem dabei besonders kostengünstig. Ein System kommunizierender Schläuche erlaubt dagegen die Bildung zwei- oder dreidimensionaler Modelle des Gefäßsystems oder Teilen davon.

Zur Erzeugung der Ausformungen kann grundsätzlich jede Art von Druckeinwirkung eingesetzt werden (z. B. hydrostatischer, pneumatischer oder mechanischer). Pneumatische Drücke eignen sich besonders, da sie einfach und kostengünstig zu erzeugen sind. Hydrostatische Drücke dagegen eignen sich besonders, weil sie die Bedingungen bei der Entstehung natürlicher Aneurysmen nachstellen.

Gemäß einer besonders zweckmäßigen Ausführungsform des erfindungsgemäßen Verfahrens wird der erste Hohlkörper vor der lokalen Erwärmung zumindest teilweise in einem zweiten Hohlkörper aus thermoplastisch nicht verformbarem Material untergebracht, wobei zumindest ein Teilbereich des zweiten Hohlkörpers zumindest einen Teilbereich des ersten Hohlkörpers formschlüssig aufnimmt. Die Gestalt des zweiten Hohlkörpers ist dabei zweckmäßigerweise an die Form des ersten Hohlkörpers (Schlauch, System kommunizierender Schläuche, zweidimensionales System kommunizierender Leitungsbahnen oder Teil desselben) angepaßt. So kann der zweite Hohlkörper beispielsweise als thermoplastisch nicht verformbare Röhre ausgebildet sein, von der mindestens ein Teilbereich zur formschlüssigen Aufnahme eines entsprechend als Schlauch ausgestalteten ersten Hohlkörpers geeignet ist. Der Schlauch kann so nach Unterbringung in der Röhre definiert ausgeformt werden.

Es ist dabei besonders zweckmäßig, wenn der zweite Hohlkörper mindestens eine Ausnehmung aufweist, insbesondere eine oder mehrere Ausnehmungen, die ellipsoid oder kreisförmig ausgebildet sind. Bei dieser Ausführungsform eignet sich der zweite Hohlkörper vorzugsweise zur Herstellung von Modellsystemen für pathologische Gefäßaussackungen, insbesondere Aneurysmen. So können durch Erwärmung der Teilbereiche des ersten Hohlkörpers, welche bei Unterbringung eines Teils oder des gesamten ersten Hohlkörpers in einem Teil oder dem gesamten zweiten Hohlkörper, unter den Ausnehmungen angeordnet sind, Ausformungen gebildet werden, deren Ansatz am ersten Hohlkörper exakt dimensionierbar ist. So können durch die gezielt Wahl einer definiert ausgestalteten (z. B. ellipsoiden oder kreisrunden) Ausformung eines definierten Durchmessers die Art des Aneurysmas und dessen Halsdurchmesser exakt vorherbestimmt werden. Auf diese Weise können unterschiedliche Arten (z. B. fusiforme oder Beerenaneurysmen) unterschiedlichen Durchmessers generiert werden.

Dabei kann es zweckmäßig sein, wenn der zweite (z. B. aus Glas, nicht thermoplastischem Kunststoff oder Metall bestehende) Hohlkörper einteilig ausgebildet ist und der erste Hohlkörper nach Ausbildung der Ausformungen in diesem verbleibt. Auf diese Weise können Zweischalenmodelle von Gefäßmißbildungen hergestellt werden, wobei der äußere, zweite Hohlkörper nicht nur die Ansatzform und -größe der Ausformungen, sondern auch die Formgebung des ersten Hohlkörpers bestimmen kann: So wird beispielsweise ein als herkömmlicher Schlauch aus thermoplastischem Material ausgebildeter erster Hohlkörper in einen zweiten Hohlkörper eingebracht, der als gebogene, mit Ausnehmungen versehene Röhre ausgebildet ist. Auf diese Weise können die der Gefäßmißbildung vor- und/oder nachgeschalteten Gefäßwindungen des die Mißbildung tragenden Gefäßes exakt dargestellt werden, ohne daß ein entsprechend vorgeformter erster Hohlkörper eingesetzt werden muß. Diese Durchführungsform des erfindungsgemäßen Verfahrens ist besonders kostengünstig, weil besonders einfache erste Hohlkörper (z. B. herkömmliche Schläuche) und vorgefertigte zweite Hohlkörper (z. B. aus Plexiglas, Glas oder Metall) verwendet werden können. Nach Verwendung des generierten Modellsystems wird der erste Hohlkörper entsorgt und der zweite Hohlkörper wieder verwendet. Es ist dabei besonders zweckmäßig, wenn beide Hohlkörper im wesentlichen durchsichtig sind.

Gemäß einer weiteren bevorzugten Durchführungsform des erfindungsgemäßen Herstellungsverfahrens wird ein zweiter Hohlkörper verwendet, der aus mindestens zwei miteinander mindestens teilweise lösbar verbindbaren Teilen besteht, deren Verbindung zur Aufnahme des ersten Hohlkörpers vor Verfahrensdurchführung und zur Entfernung desselben nach der Verfahrensdurchführung zumindest teilweise gelöst wird. So kann der zweite Hohlkörper beispielsweise aus zwei vollständig voneinander lösbaren Teilen bestehen oder, gemäß einer besonders bevorzugten Ausführungsform, aus zwei schwenkbar miteinander verbundenen Teilen, so daß er durch Auf- bzw. Zuklappen geöffnet bzw. geschlossen werden kann. Zur Aufnahme des ersten Hohlkörpers wird der zweite Hohlkörper dabei geöffnet und anschließend, vor der Erwärmung und Generierung der Ausformungen, geschlossen.

Hierzu können zweckmäßigerweise Kombinationen aus Metallplatten oder Platten aus sonstigem geeigneten Material und geeigneten Folien, insbesondere Kunststoffolien eingesetzt werden. Besonders zweckmäßig sind beheizbare Matrizenplatten, mit denen die Folie erwärmt werden kann. Die erwärmten Folien können dann mit Druck und/oder Vakuum beaufschlagt werden, so daß es zur Ausbildung des ersten Hohlkörpers kommt. Druck- und/oder Vakuumbeaufschlagung können dabei zur individuellen Ausgestaltung des herzustellenden ersten Hohlkörpers eingesetzt werden.

Nach Generierung der Ausformungen und gegebenenfalls luftdichtem Verschließen (insbesondere mittels Verkleben oder Verschweißen) des ersten Hohlkörpers kann dieser dann einfach durch Aufklappen wieder aus dem zweiten Hohlkörper entfernt werden. Der zweite Hohlkörper funktioniert dabei nach Art einer Matrize.

Diese Ausbildung des zweiten Hohlkörper weist den Vorteil auf, daß sie sich auch gut zur Verfahrensdurchführung in Kombination mit ersten Hohlkörpern eignet, welche keine Röhren sind. Besonders zweckmäßig ist es, wenn die Ausnehmungen sich jeweils über beide Teils des zweiten Hohlkörpers erstrecken, so daß die die Ausnehmung bildenden Kanten des Hohlkörpers beim Öffnen des zweiten Hohlkörpers voneinander entfernt werden und sich die Ausnehmungen folglich beim Öffnen des zweiten Hohlkörpers vergrößern. Bei dieser Ausführungsform kann der erste Hohlkörper nach der Generierung der Ausformungen aus dem zweiten Hohlkörper entfernt werden, ohne daß Gefahr besteht, den ersten Hohlkörper und die gebildeten Ausformungen zu beschädigen.

Zur Generierung künstlicher Aneurysmen ist es vorteilhaft, wenn das lokale Erwärmen ein punktuelles Erwärmen eines vordefinierten, kleinen Bereiches ist. Dabei ist es besonders zweckmäßig, wenn der zweite Hohlkörper mindestens eine Ausnehmung aufweist und der erste Hohlkörper nach Einführung in den zweiten Hohlkörper an mindestens einer der unter den Ausnehmungen angeordneten Bereichen von außen punktuell erwärmt und anschließend druckbeaufschlagt wird.

Ein weiterer Vorteil des erfindungsgemäßen Verfahrens ist die Möglichkeit, außer Aussackungen auch andere Arten von Ausformungen und somit andere Arten von Gefäßmißbildungen nachzustellen. So können beispielsweise Modellsysteme stenotischer Gefäße hergestellt werden, wobei die gebildeten Ausformungen den Gefäßabschnitten entsprechen, welche nicht verengt sind, und die im Originalzustand verbleibenden Abschnitte des ersten Hohlkörpers den stenotischen Bereichen entsprechen. Auf diese Weise wird nicht nur die für stenotische Bereiche charakteristische lokale Verengung, sondern auch die Elastizität und Dicke der Gefäßwandungen nachgestellt, welche sich bei stenotischen und physiologisch weiten Bereichen stark unterscheiden. Dabei ist es besonders zweckmäßig, wenn ein zweiter Hohlkörper verwendet wird. Insbesondere ist es vorteilhaft, einen röhrenförmigen zweiten und einen ersten Hohlkörper mit formschlüssig in den röhrenförmigen zweiten Hohlkörper passendem Schlauchsegment zu verwenden, dessen Längendimensionierung die des zweiten Hohlkörpers übersteigt, so daß nach Unterbringung eines Teilbereiches des Schlauchsegmentes in der Röhre und anschließender Erwärmung und Druckbeaufschlagung des oder der nicht in der Röhre befindlichen Teilbereiche des Schlauchsegmentes, diese ausgeweitet werden. Der von der formschlüssigen Röhre umgebene, nicht erwärmte Teilbereich behält dagegen seinen ursprünglichen Durchmesser und seine ursprüngliche Wandstärke bei.

Die Erfindung bezieht sich weiterhin auf ein Modellsystem für Gefäßmißbildungen, welches gemäß vorstehendem Verfahren hergestellt wird. Bevorzugt sind hier Gefäßmodelle für Aneurysmen und/oder Stenosen. Besonders zweckmäßig ist dabei ein erfindungsgemäßes Modellsystem, bei welchem die Wandstärke der den Hohlraum des Hohlkörpers begrenzenden Wandungen und/oder der Durchmesser des ersten Hohlkörpers im wesentlichen den Dimensionierungen entspricht, die menschliche oder tierische Blutgefäße aufweisen. Die Dimensionierung von Innendurchmesser, Wandstärke und Gesamtdurchmesser hängt dabei von der Art des oder der als Modell nachzustellenden Gefäße ab. Diese Dimensionierungen können sich somit von Modellsystem zu Modellsystem und bei komplexen Modellsystemen auch zwischen den verschiedenen künstlichen Gefäßen stark voneinander unterscheiden. So ist ein aortennahes, aneurysmatragendes Gefäß anders dimensioniert als eine cerebrale Endarterie. Diese Dimensionierungen sind dem angesprochenen Durchschnittsfachmann jedoch hinlänglich bekannt. Versuche des Erfinders ergaben, daß Innendurchmesser von zwischen 0,5 bis 30 mm und Wandstärken von ≤ 0,3 bis 4 mm besonders zweckmäßig sind. (Diese Abmessungen betreffen die nicht ausgeformten Teilbereiche des ersten Hohlkörpers. Die Ausformungen können - entsprechend den natürlichen Gefäßmißbildungen - selbstverständlich wesentlich geringere Wandstärken und wesentlich größere Innendurchmesser aufweisen.)

Einfache Modellsysteme, die im wesentlichen aus einer Leitungsbahn oder einem Schlauch mit generierter Ausformung bestehen, sind dabei besonders kostengünstig. Komplexere Modellsysteme dienen der Darstellung kommunizierender Gefäßsysteme, in denen beispielsweise die Einflüsse der Hauptströmungsvektoren auf verengte oder erweiterte Gefäßabschnitte oder Aussackungen sehr gut nachgestellt werden können.

Die Erfindung bezieht sich weiterhin auf eine Anordnung mit einem erfindungsgemäßen Modellsystem sowie einem Flüssigkeitspumpsystem, das das Modellsystem mit einer Flüssigkeit beaufschlagt. Gemäß einer besonders bevorzugten Ausführungsform wird dabei als Flüssigkeit eine isotonische Kochsalzlösung, Kunstblut oder Frischblut eingesetzt oder jede andere Flüssigkeit, welche entweder besonders kostengünstig ist oder möglichst viele Eigenschaften natürlichen Blutes aufweist.

Die Art des verwendeten Pumpsystems hängt davon ab, welche Effekte erzielt werden sollen und ist für den angesprochenen Durchschnittsfachmann einfach bestimmbar. Herkömmliche Rollen- oder Kolben-Membran-Pumpen sind kostengünstig und erlauben die Erzeugung hydrostatischer Drücke, die dem natürlichen Blutdruck entsprechen. Zur Nachstellung der Dämpfungseigenschaften von Blutgefäßen können zweckmäßigerweise regelbare periphere Widerstände vor und/oder nachgeschaltet werden. Die Simulation komplexer Strömungssysteme im künstlichen Gefäßsystem ("backflow, Pulsatilität, Druck und Frequenzvariation, angepaßt an physiologische und/oder pathologische Verhältnisse im Organismus) kann zweckmäßigerweise durch computergesteuerte Pumpsysteme (z. B. computergesteuerte Kolben-Membran-Pumpen) erfolgen. Es ist dabei besonders zweckmäßig, ein Pumpsystem zu verwenden, welches eine variabel dimensionierte Stärke der Druckbeaufschlagung ermöglicht. Auch ist es zweckmäßig, wenn das Pumpsystem eine Flüssigkeitsbeaufschlagung erlaubt, die einen hydrostatischen Puls erzeugt, dessen Frequenz und/oder Rhythmus variabel dimensionierbar sind. Zur Implementierung der erfindungsgemäßen Anordnung in Kemspintomographen (NMR) ist es zweckmäßig, wenn das Pumpsystem keine magnetischen Komponenten aufweist und z. B. vollständig aus Kunststoff besteht. Der Antrieb kann in diesem Falle beispielsweise außerhalb des Tomographen stationiert sein oder pneumatisch erfolgen.

Gemäß einer weiteren zweckmäßigen Ausführungsform, weist die erfindungsgemäße Anordnung ein visuelles Aufzeichnungssystem auf. Hier eignen sich beispielsweise herkömmliche Videosysteme mit Vergrößerungsobjektiven oder digitale Aufzeichnungssysteme. Dabei können gegebenenfalls bildgebende Verfahren wie Computertomographie, MLT, NMR oder andere, dem angesprochenen Fachmann bekannte Verfahren zum Einsatz kommen.

Die Erfindung bezieht sich überdies auf die Verwendung eines erfindungsgemäßen Modellsystems oder einer erfindungsgemäßen Anordnung, im medizinischen Bereich. Sie eignen sich insbesondere zur Untersuchung der Wirkung von auf die Blutkoagulation oder Thrombosierung einwirkenden Medikamenten; zur Entwicklung, Erprobung oder Verbesserung medizinischer Vorrichtungen zur Therapie von Gefäßmißbildungen, vorzugsweise Aneurysmen; zur Entwicklung, Erprobung oder Verbesserung medizinischer Behandlungsmethoden zur Therapie von Aneurysmen *in vitro*; zur Aus- und Weiterbildung von Medizinern oder medizinischem Fachpersonal, oder zur Analyse der Strömungsverhältnisse in und um Gefäßmißbildungen.

So kann die Nachbildung und Untersuchung von Fleißeigenschaften des Blutes in Aneurysmen und stenotischen Gefäßen vorzugsweise unter Einbringung eines Kontrastmittels bei gleichzeitiger Analyse mittels eines der vorgenannten bildgebenden Verfahren erfolgen. Auch können auf diese Weise neue Kontrastmittel und ihr Verteilungsverhalten im Gefäßsystem bei Vorliegen von Gefäßmißbildungen untersucht werden. Zur Visualisierung haemodynamischer Verteilungseigenschaften ist es dabei zweckmäßig, wenn das verwendete Kontrastmittel und die das Blut darstellende Trägerflüssigkeit unterschiedlich farbig ausgebildet sind.

Die Erfindung soll im folgenden anhand von in der Figuren dargestellten, bevorzugten Ausführungsbeispielen näher erläutert werden.

Es stellen dar:
- Figur 1: die Seitenansicht eines einfachen Aneurysmen-Schlauchmodells 1 in Vergrößerung;
- Figur 2: verschiedene Schritte der Herstellung eines zweischaligen Modellsystems 1' für Aneurysmen in vergrößerter und schematischer Darstellung;
- Figur 3: das Schema der Generierung eines künstlichen Aneurysmas 3 mit Hilfe einer Matrize 11 in Vergrößerung;
- Figur 4: schematisch die verschiedenen Schritte der Herstellung eines Modellsystems 1 für Gefäßstenosen in Vergrößerung.

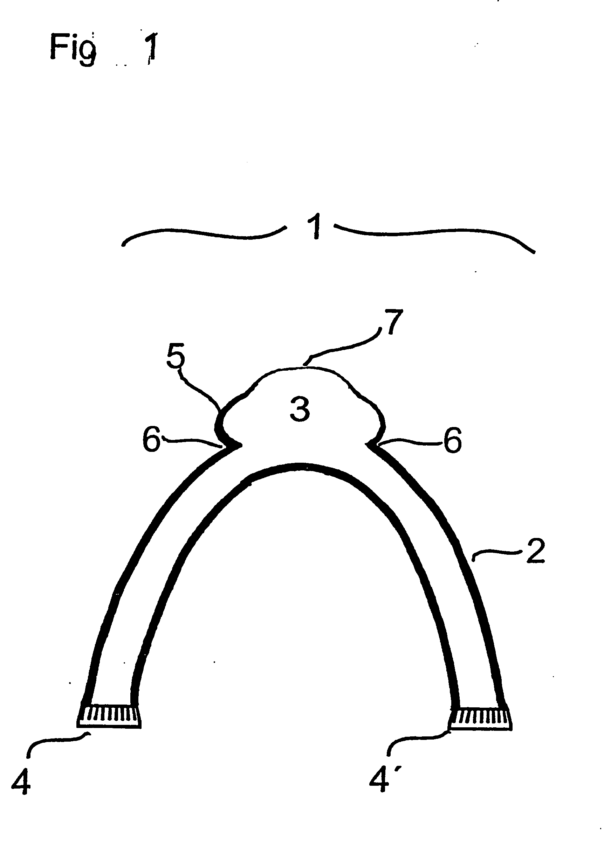

Die Figur 1 stellt ein Modellsystem 1 für ein Beerenaneurysma einer intracraniellen Arterie dar, welches aus einem PVC-Schlauch 2 gefertigt ist. Der elastische PVC-Schlauch 2 weist einen Innendurchmesser von 1,5 mm und eine Wandstärke von 0,65 mm auf. Zur Ausformung des künstlichen Aneurysmas 3 wurde der Schlauch 2 mittels einer Gasflamme punktuell auf eine Temperatur im Erweichungsbereich des PVCs erwärmt. Gleichzeitig wurde er durch eine herkömmliche Druckpumpe mit Druckluft von 0,5 bar beaufschlagt, so daß sich an der punktuell erwärmten Stelle das künstliche Aneurysma 3 ausbildete. Anschließend wurde das künstliche Aneurysma 3 mitsamt dem darin befindlichen Gas abgekühlt. Das Abkühlen wurde unter leichter Druckbeaufschlagung durchgeführt, um eine vorzeitige Kollabierung zu verhindern. Schließlich wurden die beiden Enden 4/4' des Schlauches 2 unter leichter Druckbeaufschlagung luftdicht verschweißt, so daß das künstliche Aneurysma 3 auch längere Zeit formstabil bleibt.

Das künstliche Aneurysma 3 ähnelt hinsichtlich Elastizität und Struktur natürlichen Aneurysmen, insbesondere da es aus einem flexiblem Material besteht und die Stärke seiner Wandung 5 von der Basis des Aneurysmas 6 zur Kuppel 7 stark abnimmt. Sehr ähnlich der natürlichen Situation im menschlichen Blutsystem ist auch beim künstlichen Aneurysma 3 die sehr dünnwandige Kuppel 7 besonders fragil, was durch die Druckbeaufschlagung mit Flüssigkeit noch verstärkt wird.

Das dargestellte Modellsystem 1 eignet sich insbesondere zur Erprobung neuartiger Therapieformen und diagnostischer Verfahren und zu Ausbildungszwecken. Hierzu werden die beiden Enden 4/4' des Schlauches 2 aufgetrennt und leitend mit einem Flüssigkeitspumpsystem, z. B. einer Membran-Kolben-Pumpe, verbunden. Die Verbindung erfolgt durch Kopplung von Schlauch 2 und Pumpe über ein Y-förmiges, koaxiales Dichtungssystem, das in den Schlauch 2 mündet. Durch die pulsierend erfolgende Druckbeaufschlagung mit auf 38 °C temperiertem Kunstblut wird der menschliche Puls nachgestellt. Dabei werden hydrostatische Drücke von 50 bis 250 mm Hg erzeugt. Zur Variierung von Druck, Frequenz und Rhythmus der pulsatilen Flüssigkeitsbeaufschlagung ist der Pumpe ein Computer vorgeschaltet, so daß verschiedene physiologische und pathologische Kreislaufzustände nachgestellt werden können.

Das Modellsystem 1 ist dabei, bis auf seine beiden Schlauchenden 4/4' in ein Becken eingebracht, welches mit einer auf 38 °C temperierten Flüssigkeit befüllt ist. Die Temperierung von Kunstblut und der das Modellsystem 1 einbettenden Flüssigkeit bewirkt, daß sich endovaskuläre Instrumente und mechanische Occlusionsvorrichtungen hinsichtlich Biegeverhalten und Torsionsstabilität ähnlich verhalten wie im Körper. Gleiches gilt für die Elastizität des das aneurysmatragende Gefäß darstellenden Schlauches 2. Die Einbettung des Modellsystems 1 in das Flüssigkeitsbett wirkt sich z. B. als externer Widerstand auf die Windkesseleigenschaften Schlauches 2 und das pulsatile Verhalten des Aneurysmas 3 aus.

Zur Durchführung des zu entwickelnden, auszutestenden oder zu erlernenden endovaskuläre Verfahrens wird beispielsweise ein Mikrokatheter von dem Anwender über ein haemostatisches Ventil mit Y-förmiger Abzweigung in den eröffneten Schlauch 2 geführt und bis zur Basis 6 des künstlichen Aneurysmas 3 gelenkt. Dort erfolgt dann beispielsweise die Ausbringung eines polymerisierenden Materials oder einer Occlusionsspirale. Da sowohl der das Gefäß darstellende Schlauch 2 als auch das künstliche Aneurysma 3 elastisch ausgebildet sind und ähnliche Oberflächeneigenschaften aufweisen wie sie natürliche Blutgefäße bzw. Aneurysmen aufweisen, sind Fehler bei der Manövrierung bzw. bei Einbringung des Occlusionsmaterials in das künstliche Aneurysma 3 besser detektierbar als mittels herkömmlicher Glasmodellsysteme. So wird der Operateur ein Anstoßen oder Verhaken im Schlauch 2 wahrnehmen können, und so besteht auch die Gefahr, daß eine starke Traumatisierung eine Ruptur des künstlichen Aneurysmas 3 bewirkt. Gleichzeitig weist das Modellsystem 1, ebenso wie herkömmliche Glassysteme, durch seine durchsichtige Ausbildung den Vorteil auf, daß die endovaskulären Manöver von außen einfach visuell nachvollzogen und ggf, aufgezeichnet werden können.

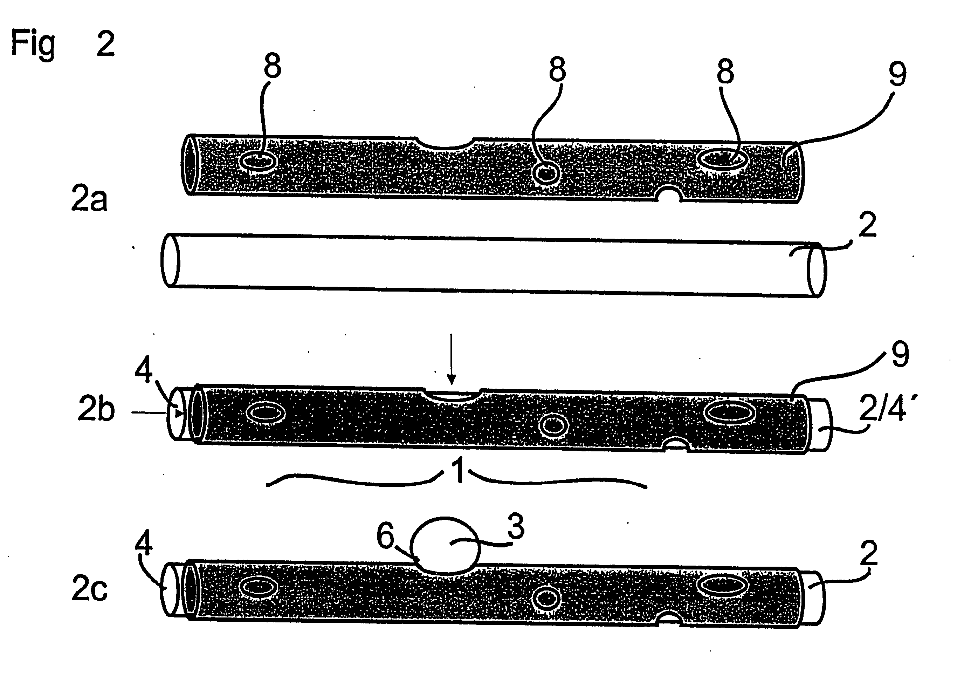

In Figur 2 sind die Schritte der Herstellung eines zweischaligen Modellsystems 1' für Aneurysmen schematisch dargestellt. Zur erfindungsgemäßen Generierung des zweischaligen Modellsystems 1' wird dabei ein elastischer Polyethylenschlauch 2 mit für das darzustellende Gefäß typischem Innendurchmesser und typischer Wandstärke in eine, mit verschieden dimensionierten, ellypsoiden und kreisförmigen Ausnehmungen 8 versehene Kupferröhre 9 eingebracht, deren Innenlumen so dimensioniert, daß es sich zur formschlüssigen Aufnahme des Polyethylenschlauches 2 eignet. Nachdem der Polyethylenschlauch 2 in die Kupferröhre 9 geschoben wurde

(siehe Figur 2b) wird er durch von außen erfolgende, lokal begrenzte und exakt dosierte Mikrowellenbestrahlung punktuell bis zum Erweichungspunkt des Polyethylens erwärmt. Die punktuelle Erwärmung von außen erfolgt an einem Teilbereich des Polyethylenschlauches 2, welcher durch eine der Ausnehmungen 8 der Kupferröhre 9 von außen zugänglich ist. Vor Erwärmung wird ein Ende 4' des Polyethylenschlauches 2 durch Verschmelzen luftdicht verschlossen. Anschließend wird das andere Ende 4 über ein koaxiales Dichtungssystem leitend mit einer herkömmlichen Membran-Kolben-Pumpe verbunden.

Nach Erwärmung bis zum Erweichungspunkt des Materials erfolgt die Druckbeaufschlagung durch die Membran-Kolben-Pumpe, welche so eingestellt ist, daß über einen vordefinierten Zeitraum ein definiertes Volumen an Luft in den Schlauch 2 eingebracht wird. Auf diese Weise wird die Größe der zu generierenden Ausformung bestimmt und gleichzeitig gewährleistet, daß die erweichte Stelle nicht aufgrund zu starker Druckbeaufschlagung oder zu schneller Aufweitung reißt. Infolge der Druckbeaufschlagung des erwärmten Bereiches bildet sich, wie in Figur 2c dargestellt, eine Ausformung aus, welche das künstliche Aneurysma 3 bildet. Gleichermaßen kann die Herstellung und Modulation der Ausformung durch Anlegen eines Vakuums von außerhalb des Schlauches erfolgen (oder eine Kombination aus Druckbeaufschlagung von innerhalb des Schlauches und Vakuumanlegung von außerhalb). Anschließend kann das so generierte Zweischalenmodell 1' direkt zur Erlernung oder Entwicklung medizinischer Techniken verwendet oder für die spätere Verwendung durch Verschweißen des noch offenen Endes 4 luftdicht versiegelt werden.

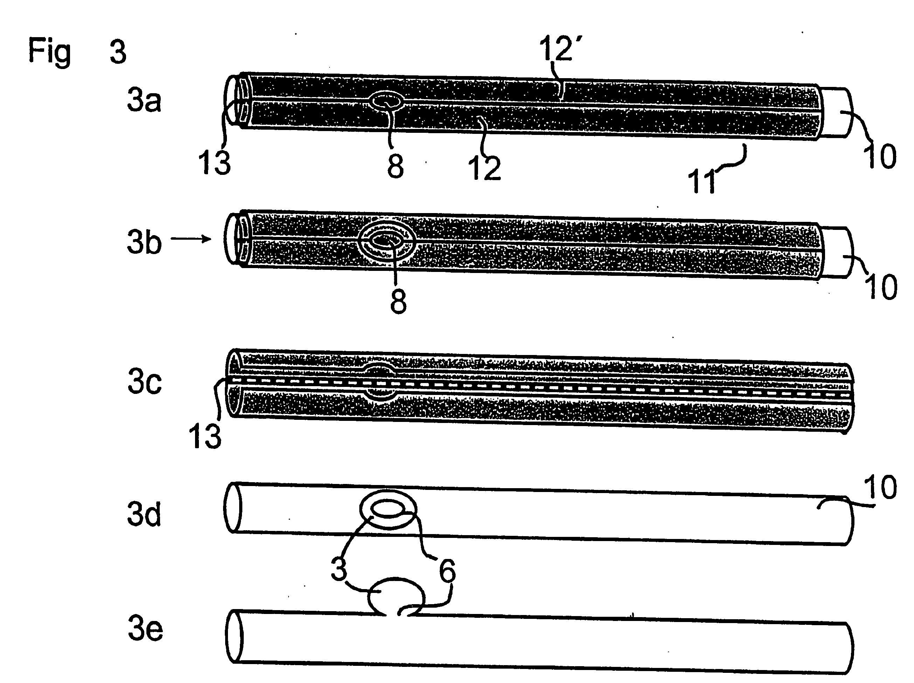

Das in Figur 2c dargestellte Zweischalenmodell 1' eignet sich insbesondere zur exakten Ausformung der dem Aneurysma vor- und nachgeschalteten Gefäßabschnitte (z. B. in Form definierter Windungen oder, wie in Figur dargestellt, als exakt geraden Gefäßabschnitt). Gleichzeitig können die Größe des Aneurysmenhalses 6 und des Aneurysmas 3 mit diesem Zweischalenmodell 1' exakt bestimmt werden. Zur Verwendung des Zweischalmodells 1' werden die beiden verschlossenen Enden 4/4' eröffnet und das Modell 1' mit Flüssigkeit beaufschlagt. Anschließend kann der das Aneurysma 3 tragende flexible Schlauch 2 einfach aus der Kupferröhre 9 gezogen und entsorgt werden. Die Kupferröhre 9 ist dagegen vielfach wiederverwendbar. Es ist ebenso zweckmäßig, wenn die Kupferröhre 9 eine längsverlaufende Naht aufweist, entlang der sie aufklappbar ist (vergleiche Beispiel der Figur 3).

In Figur 3 sind schematisch die verschiedenen Schritte der Herstellung künstlicher Aneurysmen an einem dreidimensionalen System kommunizierender Schläuche, von dem nur ein Ausschnitt 10 abgebildet ist, dargestellt. Auf gleiche Weise kann selbstverständlich die Herstellung eines Aneurysmenmodellsystems auf Basis eines einfachen Schlauches (analog zum Beispiel der Figur 2) erfolgen. In diesem Beispiel werden die zu bildenden künstlichen Aneurysmen 3 mit Hilfe einer röhrenförmigen Matrize 11 hergestellt. Diese besteht aus zwei Teilen 12/12', welche an einer Kante mittels eines Scharniergelenkes 12 miteinander schwenkbar verbunden sind, so daß die Matrize 11 durch Gegeneinanderschwenken der beiden Teile 12/12' geöffnet und geschlossen werden kann. Zur Einbringung des schlauchförmigen Teilbereiches 10 des dreidimensionalen Systems kommunizierender Schläuche in die Matrize 11 wird die Matrize 11 geöffnet. Nach Einlegen des Teilbereiches 10 wird sie wieder geschlossen. Zwecks festen Verschließens sind die beiden Teile 12/12' der Matrize 11 an ihren nicht durch das Scharniergelenk 13 verbundenen Kanten mit Rastverbindungen versehen, welche nur unter leichter mechanischer Druckeinwirkung wieder voneinander gelöst werden können. Auf diese Weise wird verhindert, daß die Matrize 11 durch die Druckbeaufschlagung während der Erzeugung des künstlichen Aneurysmas 3 geöffnet wird. Andererseits ermöglicht diese Verbindung die einfache Lösung der beiden Teile 12/12' voneinander.

Die zur vordefinierten Ausformung des künstlichen Aneurysmas 3 verwendete Ausnehmung 8 ist so auf beiden Teilen 12/12' der Matrize 11 angeordnet, daß es die freien Kanten der beiden Teile 12/12' überspannt. Nach Ausformung des künstlichen Aneurysmas 3 kann der Teilbereich 10 mitsamt gebildetem künstlichen Aneurysma 3 so einfach aus der geöffneten Matrize 11 entfernt werden. Zweckmäßig sind auch Matrizen 11, welche entlang der freien Kanten der Matrizenteile mehrere, gegebenenfalls unterschiedlich dimensionierte Ausnehmungen 8 aufweisen, so daß wahlweise ein oder mehrere bzw. unterschiedlich dimensionierte oder positionierte Aneurysmen 3 mit einer einzigen Matrize 11 generiert werden können.

Nach Verschließen der Matrize 11 und Erwärmung des Teilbereiches 10 an einer definierten, unter der Ausnehmung 8 angeordneten Stelle wird durch Druckeinwirkung (siehe Pfeil, Figur 3b) ein Aneurysma vordefinierter Größe ausgebildet. Anschließend wird der Teilbereich 10, wie in den Figuren 3c und 3d dargestellt, durch Öffnen der Matrize 11 und Herausnahme von der Matrize 11 entfernt. Das dreidimensionale System kommunizierender Schläuche kann anschließend ohne die Matrize 11 weiterverwendet werden. Durch das schematisch dargestellte Verfahren können künstliche Aneurysmen mit vordefinierter Dimensionierung des Halses 6 (siehe Figuren 3d und 3e) generiert werden. Im Anschluß an die Ausformung des Aneurysmas 3 können gegebenenfalls weitere Gefäßmißbildungen bzw. Aneurysmen an anderen oder dem gleichen Teilbereich des dreidimensionalen Systems kommunizierender Schläuche ausgeformt werden, bis das gewünschte Modellsystem fertiggestellt ist.

Das generierte Modellsystem wird anschließend in ein mit einem aushärtenden Gel befüllten Becken eingebracht, so daß nach Aushärtung des Gels die dreidimensionale Form des Systems stabilisiert wird, ohne die Elastizität des Modellsystems völlig zu unterbinden. Das Gel dient gleichzeitig als Art peripheren Widerstandes und Dämpfer der Windkesseleigenschaften, entsprechend der die cerebralen Gefäße umgebenden Gewebe bzw. Himwasser, so daß sich eine solche Anordnung insbesondere zur Nachstellung cerebraler Gefäßnetze eignet.

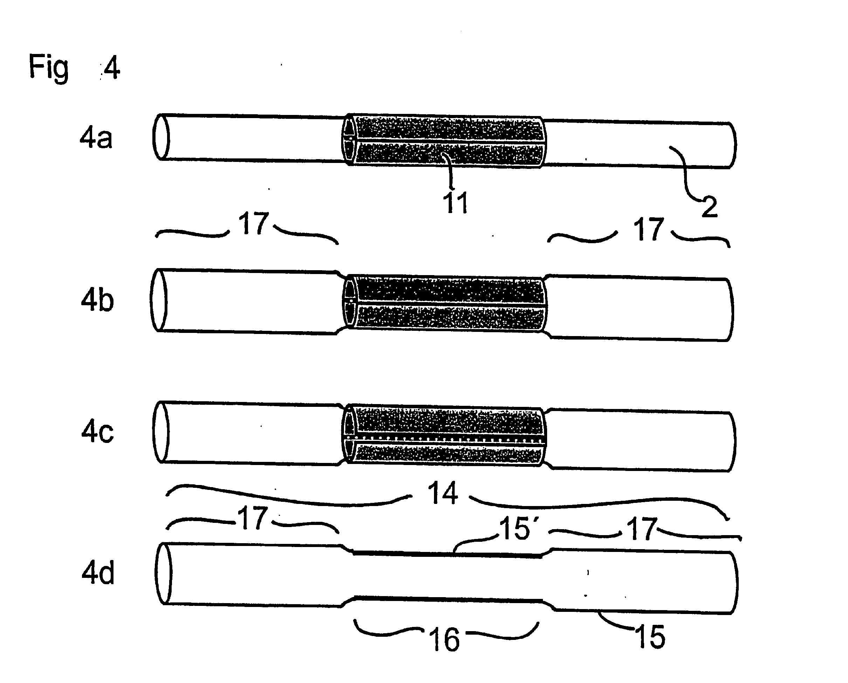

In Figur 4 ist ein Beispiel der Herstellung eines Modellsystems 14 für stenotische Gefäße schematisch dargestellt. Dazu wird ein flexibler Polyethylenschlauch 2 mit einem Innendurchmesser von 6,0 mm und einer Wandstärke von 1,5 mm in eine formschlüssige, aufklappbare Matrize 11 eingebracht. Anschließend werden die, nicht in der Matrize 11 untergebrachten Segmente 17 des Schlauches 2 durch lokale Wärmeeinwirkung mittels eines erwärmten Paraffinöls von außen bis zum Erweichungspunkt erwärmt und durch Druckbeaufschlagung aufgeweitet. Dann wird, wie in Figur 4 dargestellt, die Matrize geöffnet und das generierte Modellsystem 14 nach Erkalten von der Matrize 11 entfernt. Wie in Figur 4d dargestellt, gibt das Modellsystem 14 nicht nur die unterschiedlichen Dimensionierungen des Innenlumens stenotischer Gefäße, sondern gibt auch die unterschiedlichen Wandstärken der Gefäßwand 15 bzw. 15' an dem stenotischen 16 und den physiologischen Segmenten 17 wieder. Aufgrund der unterschiedlichen Wandstärken ist auch das elastische Verhalten der verschiedenen Gefäßabschnitte 16/17 im Modellsystem stenotischer Gefäße 14 entsprechend den Verhältnissen im Körper unterschiedlich ausgebildet.

## Patentansprüche

1. Verfahren zur Herstellung eines Modellsystems für Gefäßmißbildungen (1), mit den Schritten:
a) lokales Erwärmen eines ersten Hohlkörpers, welcher zur Flüssigkeitsdurchleitung geeignet ist und zumindest in einem oder mehreren Teilbereichen aus flexiblem, thermoplastisch verformbarem Material besteht, an mindestens einem der Teilbereiche bis zum Erweichen des thermoplastisch verformbaren Meterials, sowie
b) Druckbeaufschlagung des ersten Hohlkörpers mit einem Druck, der groß genug ist, eine Ausformung der erwärmten Stelle zu bewirken, wobei anhand der Dauer der Druckeinwirkung und/oder der Stärke des einwirkenden Druckes die Größe der Ausformung bestimmt wird.

2. Verfahren gemäß Anspruch 1, **gekennzeichnet durch** luftdichtes Verschließen des unter Gasdruck stehenden ersten Hohlkörpers nach Fertigstellung der Ausformung.

3. Verfahren gemäß Anspruch 2 **dadurch gekennzeichnet, daß** das Verschließen durch Verschmelzen oder Verkleben der Öffnungen des ersten Hohlkörpers erfolgt.

4. Verfahren gemäß einem der vorstehenden Ansprüche 1 bis 3, **dadurch gekennzeichnet, daß** zumindest die erzeugte Ausformung durchscheinend oder durchsichtig ausgebildet ist.

5. Verfahren gemäß einem der vorstehenden Ansprüche 1 bis 4, **dadurch gekennzeichnet, daß** der gesamte Hohlkörper aus flexiblem Material besteht

6. Verfahren gemäß einem der vorstehenden Ansprüche 1 bis 5, **dadurch gekennzeichnet, daß** der gesamte Hohlkörper aus thermoplastisch verformbarem Material besteht.

7. Verfahren gemäß einem der vorstehenden Ansprüche, **dadurch gekennzeichnet, daß** das thermoplastisch verformbare Material PVC, PUR, PP oder PE ist.

8. Verfahren gemäß einem der Ansprüche 1 bis 7, **dadurch gekennzeichnet, daß** die lokale Erwärmung durch die lokale Einwirkung einer erhitzten Flüssigkeit, vorzugsweise einer lipophilen Flüssigkeit mit hohem Siedepunkt, durch die lokale Einwirkung einer Flamme, vorzugsweise einer durch einen Gasbrenner erzeugten Flamme, durch die lokale Einwirkung eines erhitzten Drahtes, vorzugsweise einer Drahtspirale oder Spule, oder durch die lokal begrenzte Bestrahlung mit Mikrowellen erfolgt.

9. Verfahren gemäß Anspruch 8, **dadurch gekennzeichnet, daß** die lokale Erwärmung durch Wärmeeinwirkung einer Wärmequelle von außerhalb des Hohlkörpers erreicht wird.

10. Verfahren gemäß einem der Ansprüche 1 bis 9, **gekennzeichnet durch** einen zweiten Hohlkörper, der beheizbar ist und eine Erwärmung des ersten Hohlkörpers bewirkt.

11. Verfahren gemäß einem der vorstehenden Ansprüche, **dadurch gekennzeichnet, daß** der erste Hohlkörper ein System aus zweidimensional angeordneten, miteinander kommunizierenden Leitungsbahnen oder Teil eines solchen Systems ist.

12. Verfahren gemäß Anspruch 11, **dadurch gekennzeichnet, daß** das System durch bereichsweises Verschweißen oder Verkleben zweier übereinanderliegender Kunststoffolien erzeugt wird.

13. Verfahren gemäß Anspruch 12, **dadurch gekennzeichnet, daß** die Kunststoffolien aus reißfestem Material ausgebildet sind.

14. Verfahren gemäß einem der Ansprüche 1 bis 10, **dadurch gekennzeichnet, daß** der erste Hohlkörper als Schlauch (2), System kommunizierender Schläuche oder Teil (10) eines solchen Systems ausgebildet ist.

15. Verfahren gemäß einem der vorstehenden Ansprüche, **dadurch gekennzeichnet, daß** der erste Hohlkörper vor der Erwärmung zumindest teilweise in einem zweiten Hohlkörper aus thermoplastisch nicht verformbarem Material untergebracht wird, wobei zumindest ein Teilbereich des zweiten Hohlkörpers zumindest einen Teilbereich des ersten Hohlkörpers formschlüssig umgibt.

16. Verfahren gemäß Anspruch 15, **dadurch gekennzeichnet, daß** der zweite Hohlkörper mindestens eine Ausnehmung (8) aufweist.

17. Verfahren gemäß Anspruch 16, **dadurch gekennzeichnet, daß** die Ausnehmung ellipsoid oder kreisförmig ausgebildet ist.

18. Verfahren gemäß einem der Ansprüche 15 bis 17, **dadurch gekennzeichnet, daß** der zweite Hohlkörper einteilig ausgebildet ist und der erste Hohlkörper nach Ausbildung der Ausformungen in diesem verbleibt.

19. Verfahren gemäß einem der Ansprüche 15 bis 17, **dadurch gekennzeichnet, daß** der zweite Hohlkörper aus mindestens zwei miteinander mindestens teilweise lösbar verbindbaren Teilen (12) besteht, deren Verbindung zur Aufnahme des ersten Hohlkörpers vor und zur Entfernung desselben nach der Verfahrensdurchführung mindestens teilweise gelöst wird.

20. Verfahren gemäß Anspruch 19, **dadurch gekennzeichnet, daß** der zweite Hohlkörper aus zwei schwenkbar miteinander verbundenen Teilen (12) besteht, und durch Auf- und Zuklappen geöffnet bzw. geschlossen wird.

21. Verfahren gemäß einem der Ansprüche 15 bis 20, **dadurch gekennzeichnet, daß** der zweite Hohlkörper röhrenförmig ausgebildet ist.

22. Verfahren gemäß einem der vorstehenden Ansprüche, **dadurch gekennzeichnet, daß** das lokale Erwärmen ein punktuelles Erwärmen ist.

23. Verfahren gemäß Anspruch 22, **dadurch gekennzeichnet, daß** der zweite Hohlkörper mindestens eine Ausnehmung aufweist und der erste Hohlkörper nach Einführung in den zweiten Hohlkörper an mindestens einer der unter den Ausnehmungen angeordneten Bereichen von außen punktuell erwärmt wird.

24. Verfahren gemäß Anspruch 21, **dadurch gekennzeichnet, daß** der erste Hohlkörper ein formschlüssig in den röhrenförmigen zweiten Hohlkörper passendes Schlauchsegment aufweist, dessen Längendimensionierung die des zweiten Hohlkörpers übersteigt, so daß nach Unterbringung eines Teilbereiches des Schlauchsegmentes in der Röhre und anschließender Erwärmung und Druckbeaufschlagung des oder der nicht in der Röhre befindlichen Teilbereiche, diese ausgeweitet werden, wobei der von der formschlüssigen Röhre umgebene, nicht erwärmte Teilbereich seinen ursprünglichen Durchmesser und seine ursprüngliche Wandstärke beibehält.

25. Modellsystem für Gefäßmißbildungen, erhältlich durch das Verfahren, nach einem der Ansprüche 1 bis 24.

26. Modellsystem gemäß Anspruch 25, **dadurch gekennzeichnet, daß** die Wandstärke der den Hohlraum des ersten Hohlkörpers begrenzenden Wandung (15) und/oder der Durchmesser des ersten Hohlkörpers Dimensionierungen aufweisen, die denen menschliche oder tierischer Blutgefäße entsprechen.

27. Anordnung enthaltend ein Modellsystem gemäß einem der Ansprüche 25 oder 26 sowie ein Pumpsystem zur Flüssigkeitsbeaufschlagung des Modellsystems.

28. Anordnung gemäß Anspruch 27, **gekennzeichnet durch** ein visuelles Aufzeichnungssystem.

29. Anordnung gemäß einem der Ansprüche 27 oder 28, **dadurch gekennzeichnet, daß** zumindest ein Teil des Modellsystems in einer Flüssigkeit oder einem Gel eingebettet ist.

30. Anordnung gemäß einem ,der Ansprüche 27 bis 29, **dadurch gekennzeichnet, daß** die beaufschlagte Flüssigkeit eine isotonische Kochsalzlösung, Kunstblut oder Frischblut ist.

31. Verwendung eines Modellsystems gemäß einem der Ansprüche 25 oder 26 oder einer Anordnung gemäß einem der Ansprüche 27 bis 30 zu Zwecken der Forschung, Entwicklung und/oder Schulung auf medizinischem Gebiet.

## Claims

1. Method for the generation of a modeling system for vascular malformations (1), comprising the steps:
a) local heating of a first hollow body which is suited for conducting liquid and consists, at least in one or more partial areas, of a flexible, thermoplastically deformable material, such local heating being effected on at least one of the partial areas until the thermoplastically deformable material softens, and
b) subjecting the first hollow body to a pressure that is high enough to cause a deformation at the heated location, with the size of the deformation being governed by the duration of the pressure applied and/or by the intensity of the pressure applied.

2. The method according to claim 1, **characterized by** a hermetic closure of the first hollow body subjected to gas pressure after the deformation has been produced.

3. The method according to claim 2, **characterized in that** the closure is effected by fusing or bonding together the openings of the first hollow body.

4. Method according to any one of the above claims 1 to 3, **characterized in that** at least the deformation produced and preferably the entire first hollow body is designed so as to be translucent or basically transparent.

5. The method according to any one of the above claims 1 to 4, **characterized in that** the entire hollow body consists of flexible material.

6. The method according to any one of the above claims 1 to 5, **characterized in that** the entire hollow body consists of thermoplastically deformable material.

7. Method according to any one of the above claims, **characterized in that** the thermoplastically deformable material is PVC, PUR, PP or PE.

8. The method according to any one of the claims 1 to 7, **characterized in that** the local heating is brought about by the local effect caused by a hot liquid, preferably a lipophilic liquid having a high boiling point, through the local effect caused by a flame, preferably a flame generated by a gas torch, through the local application of a hot wire, preferably a wire spiral or coil, or through the locally confined exposure to microwaves.

9. The method according to claim 8, **characterized in that** the local heating is achieved through the application of a heat source external to the hollow body.

10. The method according to any one of the claims 1 to 9, **characterized by** a second hollow body which is heatable and effects heating of the first hollow body.

11. The method according to any one of the above claims, **characterized in that** the first hollow body is a system of two-dimensionally arranged pathways communicating with each other, or part of such a system.

12. The method according to claim 11, **characterized in that** the system is produced by sticking together sectionally two plastic foils arranged one on top of the other by welding or bonding methods.

13. The method according to claim 12, **characterized in that** the plastic foils are made of tearproof material.

14. The method according to any one of claims 1 to 10, **characterized in that** the first hollow body is designed as a hose (2), system of communicating hoses or part (10) of such a system.

15. A method according to any one of the above claims, **characterized in that** the first hollow body, prior to heating, is placed at least partially into a second hollow body consisting of a material that cannot be thermoplastically deformed with at least a partial area of the second hollow body accommodating at least a partial area of the first hollow body in a form-closed manner.

16. The method according to claim 15, **characterized in that** the second hollow body is provided with at least one cut-out (8).

17. The method according to claim 16, **characterized in that** the cut-out has an ellipsoidal or annular shape.

18. Method according to any one of the claims 15 to 17, **characterized in that** the second hollow body is of one-piece construction and the first hollow body remains in it after the deformations have been produced.

19. Method according to any one of claims 15 to 17, **characterized in that** the second hollow body consists of at least two portions (12) which can be interconnected with each other and at least partially disconnected, the connection of which is at least partially separated to allow the first hollow body to be accommodated prior to the method being carried out and removed after implementation of the method has been completed.

20. The method according to claim 19, **characterized in that** the second hollow body consists of two parts (12) that are slewably connected and can be snapped open or close.

21. Method according to any one of the claims 15 to 20, **characterized in that** the second hollow body has a tubular form.

22. Method according to any one of the above claims, **characterized in that** the local heating is applied in a spotwise manner.

23. The method according to claim 22, **characterized in that** the second hollow body has at least one cut-out and the first hollow body having been introduced into the second hollow body is heated in a spot-like manner from the outside in at least one of the areas located under the cut-outs.

24. The method according to claim 21, **characterized in that** the first hollow body comprises a hose segment that fits in a form-closed manner into the second hollow body of tubular design, with the longitudinal dimension of said first body exceeding the length of the second hollow body so that after a partial area of the hose segment has been placed inside the tube and such partial area or areas of the hose segment not inside the tube have subsequently been heated up and subjected to pressure a dilatation of this or these areas will take place, with the non-heated partial area which is embraced by the form-closed tube will maintain its original diameter as well as its original wall thickness.

25. Modeling system for vascular malformations obtainable by the method according to any one of claims 1 to 24.

26. The modeling system according to claim 25, **characterized in that** the thickness of the walls (15) that enclose the hollow space of the first hollow body and/or the diameter of the first hollow body correspond to the dimensioning of blood vessels as they exist in humans or animals.

27. Arrangement comprising a modeling system according to any one of claims 25 and 26 as well as a pumping system for filling the modeling system with liquid.

28. The arrangement according to claim 27, **characterized by** a visual recording system.

29. Arrangement according to any one of claims 27 and 28, **characterized in that** at least part of the modeling system is embedded in a liquid or gel.

30. Arrangement according to any one of claims 27 to 29, **characterized in that** the liquid filled in is an isotonic common salt solution, artificial blood or fresh blood.

31. Use of a modeling system according to any one of claims 25 or 26 or an arrangement according to any one of claims 27 to 30 for the purpose of research, development and/or training in the medical field.

## Revendications

1. Procédé de réalisation d'un système de modélisation de malformations vasculaires (1), comprenant les étapes suivantes :
a) réchauffement local d'un premier corps creux qui convient pour conduire un liquide et est constitué, au moins dans une ou plusieurs parties, d'un matériau souple déformable thermoplastiquement, dans au moins l'une des parties jusqu'à ramollir le matériau déformable thermoplastiquement, et
b) mise sous pression du premier corps creux avec une pression qui est suffisamment grande pour provoquer une déformation de la zone chauffée, l'ampleur de la déformation étant déterminée à l'aide de la durée de la mise sous pression et/ou de l'intensité de la pression exercée.

2. Procédé selon la revendication 1, **caractérisé par** le fait de fermer, de manière hermétique, à l'air le premier corps creux mis sous pression de gaz au terme de la déformation.

3. Procédé selon la revendication 2, **caractérisé en ce que** la fermeture est effectuée par fusion ou collage des ouvertures du premier corps creux.

4. Procédé selon l'une des revendications précédentes 1 à 3, **caractérisé en ce qu'**au moins la déformation produite est réalisée translucide ou transparente.

5. Procédé selon l'une des revendications précédentes 1 à 4, **caractérisé en ce que** tout le corps creux est constitué d'un matériau flexible.

6. Procédé selon l'une des revendications précédentes 1 à 5, **caractérisé en ce que** tout le corps creux est constitué du matériau souple déformable thermoplastiquement.

7. Procédé selon l'une des revendications précédentes, **caractérisé en ce que** le matériau déformable thermoplastiquement est du PVC, du PUR, du PP ou du PE.

8. Procédé selon l'une des revendications 1 à 7, **caractérisé en ce que** le réchauffement local est effectué par application locale d'un liquide chauffé, de préférence d'un liquide lipophile à point d'ébullition élevé, par application locale d'une flamme, de préférence d'une flamme produite par un brûleur à gaz, par application locale d'un fil chauffé, de préférence d'une spirale en fil ou d'une bobine, ou par irradiation localement limitée avec des micro-ondes.

9. Procédé selon la revendication 8, **caractérisé en ce que** le réchauffement local est obtenu par application d'une source de chaleur depuis l'extérieur du corps creux.

10. Procédé selon l'une des revendications 1 à 9, **caractérisé par** un deuxième corps creux qui peut être chauffé et provoque un réchauffement du premier corps creux.

11. Procédé selon l'une des revendications précédentes, **caractérisé en ce que** le premier corps creux est un système de pistes conductrices disposées en deux dimensions et communiquant entre elles, ou une partie d'un tel système.

12. Procédé selon la revendication 11, **caractérisé en ce que** le système est produit par soudage, ou collage par zones, de deux films de matière plastique superposés.

13. Procédé selon la revendication 12, **caractérisé en ce que** les films de matière plastique sont réalisés dans un matériau résistant à la déchirure.

14. Procédé selon l'une des revendications 1 à 10, **caractérisé en ce que** le premier corps creux est conformé en tuyau (2), en système de tuyaux communicants ou en partie (10) d'un tel système.

15. Procédé selon l'une des revendications précédentes, **caractérisé en ce que** le premier corps creux est logé, avant le réchauffement, au moins partiellement dans un deuxième corps creux en matériau non déformable thermoplastiquement ; au moins une partie du deuxième corps creux entourant, par engagement positif, une partie du premier corps creux.

16. Procédé selon la revendication 15, **caractérisé en ce que** le deuxième corps creux présente un évidement (8).

17. Procédé selon la revendication 16, **caractérisé en ce que** l'évidement est en forme d'ellipsoïde ou de cercle.

18. Procédé selon l'une des revendications 15 à 17, **caractérisé en ce que** le deuxième corps creux est réalisé d'une seule pièce et le premier corps creux reste dans celui-ci après réalisation des déformations.

19. Procédé selon l'une des revendications 15 à 17, **caractérisé en ce que** le deuxième corps creux est constitué d'au moins deux parties (12) pouvant être reliées entre elles au moins partiellement de façon amovible, dont la jonction est au moins partiellement libérée pour recevoir le premier corps creux avant et pour le retrait de celui-ci après l'application du procédé.

20. Procédé selon la revendication 19, **caractérisé en ce que** le deuxième corps creux est constitué de deux parties (12) connectées l'une à l'autre de manière pivotante, à ouverture-fermeture par poussée.

21. Procédé selon l'une des revendications 15 à 20, **caractérisé en ce que** le deuxième corps creux est réalisé tubulaire.

22. Procédé selon l'une des revendications précédentes, **caractérisé en ce que** le réchauffement local est un réchauffement ponctuel.

23. Procédé selon la revendication 22, **caractérisé en ce que** le deuxième corps creux présente au moins un évidement et le premier corps creux est réchauffé ponctuellement de l'extérieur, après introduction dans le deuxième corps creux, dans au moins l'une des zones situées sous les évidements.

24. Procédé selon la revendication 21, **caractérisé en ce que** le premier corps creux présente un segment de tuyau s'insérant par engagement positif dans le deuxième corps creux tubulaire, dont le dimensionnement en longueur dépasse celui du deuxième corps creux, de sorte qu'après avoir logé une partie du segment de tuyau dans le tube et avoir ensuite chauffé et mis sous pression la ou les zones ne se trouvant pas dans le tube, celles-ci sont élargies, la zone non réchauffée et entourée par le tube à engagement positif conservant son diamètre d'origine et son épaisseur de paroi d'origine.

25. Système de modélisation de malformations vasculaires, pouvant être obtenu par le procédé selon l'une des revendications 1 à 24.

26. Système de modélisation selon la revendication 25, **caractérisé en ce que** l'épaisseur de paroi de la paroi (15) délimitant la cavité du premier corps creux et/ou le diamètre du premier corps creux présente des dimensions qui correspondent à celles des vaisseaux sanguins humains ou animaux.

27. Ensemble comprenant un système de modélisation selon l'une des revendications 25 ou 26, ainsi qu'un système de pompe pour l'exposition du système de modélisation à un liquide.

28. Ensemble selon la revendication 27, **caractérisé par** un système d'enregistrement visuel.

29. Ensemble selon l'une des revendications 27 ou 28, **caractérisé en ce qu'**au moins une partie du système de modélisation est noyée dans un liquide ou un gel.

30. Ensemble selon l'une des revendications 27 à 29 **caractérisé en ce que** le liquide chargé est une solution de sérum physiologique isotonique, du sang artificiel ou du sang frais.

31. Utilisation du système de modélisation selon l'une des revendications 25 ou 26 ou d'un ensemble selon l'une des revendications 27 à 30 à des fins de recherche, de développement et/ou de formation dans le domaine médical.
